# EUROPÄISCHE PATENTSCHRIFT

(11) **EP 0 456 899 B1**
(45) Veröffentlichungstag und Bekanntmachung des Hinweises auf die Patenterteilung: **09.10.1996**
(21) Anmeldenummer: 90123833.7
(22) Anmeldetag: 11.12.1990
(51) Int. Cl.: G02B 6/44

(54) **LWL-Luftkabel für grosse Spannfeldlängen**
Fibre optic overhead cable for long suspension lengths
Câble aérien à fibres optiques grande portée

(30) Priorität: 15.05.1990 DE 4015568
(43) Veröffentlichungstag der Anmeldung: 21.11.1991
(73) Patentinhaber: kabelmetal electro GmbH, D-30002 Hannover (DE)
(72) Erfinder: Braunmiller, Michael, W-7000 Stuttgart 75 (DE); Grögl, Ferdinand, W-7141 Beilstein (DE); Hoffmann, Franz, W-7143 Vaihingen/Enz. (DE); Niyazi, Ismat, W-7000 Stuttgart 70 (DE)

(56) Entgegenhaltungen:
- EP-A- 0 221 243
- EP-A- 0 228 132
- EP-A- 0 261 675
- WO-A-90/06530

## Beschreibung

Die Erfindung betrifft ein Lichtwellenleiterluftkabel mit einem Zentralelement aus einem Material hoher Festigkeit, einer um das Zentralelement herumgeseilten ersten Lage mit zumindest einer Hohl- und/oder Bündelader, einer konzentrisch zur ersten Lage angeordneten zweiten Lage aus mehreren zugfesten Flachelementen aus glasfaserverstärktem Kunststoff, sowie einem Kunststoffmantel.

Es sind Lichtwellenleiterluftkabel bekannt geworden, die eine metallische Armierung aufweisen, welche von den konventionellen Fernmelde-Luftkabeln her bekannt ist.

Wegen der Gefahr der Beeinträchtigung metallhaltiger Luftkabel durch elektrische Felder haben sich metallfreie Lichtwellenleiterluftkabel durchgesetzt. Probleme bestehen bei den metallfreien Lichtwellenleiterluftkabeln jedoch darin, die nationalen und internationalen Normen bezüglich der Zusatzlasten durch Eis und Wind zu erfüllen.

Da bei den Lichtwellenleiterluftkabeln keine elektrische Speiseenergie mitgeführt werden kann, muß die Übertragungsstrecke möglichst weit regeneratorfrei arbeiten, d. h., die Glasfaser darf nur eine geringe Dämpfung aufweisen und es sollen möglichst wenig Spleiße vorhanden sein, d. h., große Einzellängen der Kabel sind erforderlich.

Aus AEG-Kabel Technische Mitteilungen Heft 1/1984 ist ein Lichtwellenleiterluftkabel bekannt, welches aus einem zentralen Stauchelement, einer Lage aus Hohladern, die um das Stauchelement herumgeseilt sind, einer Lage aus Armierungsstäben aus glasfaserverstärktem Kunststoff sowie einem Außenmantel aus Polyethylen besteht. Dieses Kabel hat einen Außendurchmesser von 15,6 mm, ein Gewicht von ca. 230 kg/km und eine maximale Spannweite von 700 m. Wird über der Armierungslage aus glasfaserverstärktem Kunststoff eine weitere gleiche Armierungslage aufgebracht, steigen zwar der Außendurchmesser auf 19,6 mm und das Gewicht auf ca. 370 kg/km, jedoch steigt auch die maximale Spannweite auf ca. 1000 m.

Aus der zum Stand der Technik nach Artikel 54 (3) EPÜ gehörenden WO 90/06530 A1 ist ein selbsttragendes optisches Kabel bekannt, welches aus einem zugfesten Zentralelement, einer auf das Zentralelement mit wechselnder Schlagrichtung aufgeseilten ersten Lage aus optischen Leitern, einer die Seele mit Abstand umgebenden Zugentlastungslage mit aus Verstärkungsfasern gebildeten Profilkörpern mit flachem Querschnitt sowie einem Kunststoffaußenmantel besteht. Zwischen der ersten Lage und der Zugentlastungslage ist ein Innenmantel vorgesehen, auf den die Profilkörper aufgeseilt sind. Die Seitenflächen der Profilkörper sind so ausgestattet, daß die Profilkörper mittels der formschlüssig miteinander verbundenen Seitenflächen einen gegen Veränderungen des Durchmessers stabilen geschlossenen Mantel bilden. Ein solches Kabel ist beständig gegen Zug-, Biege- und Druckbelastung und insbesondere für Spannweiten bis zu 100 m geeignet.

Die EP-A-0 261 675 beschreibt ein optisches Kabel mit einem zentralen Zugelement, einer auf das Zugelement aufgeseilten Lage aus Lichtwellenleitern und Pufferelementen sowie einer die Lichtwellenleiter und Pufferelemente umgebenden Hülle. Auf die Hülle ist ein zugfester Kabelmantel aufgebracht, der aus einem Netzband und einer darüber extrudierten Kunststoffschicht besteht.

Der vorliegenden Erfindung liegt die Aufgabe zugrunde, das Lichtwellenleiterluftkabel dahingehend zu verbessern, daß hohe Abspannkräfte auch bei höheren Temperaturen von z. B. + 60° C und mehr über den Kabelmantel auf die Zugentlastungselemente übertragen werden können. Eine weitere Aufgabe besteht darin, daß bei allen Betriebszuständen, d. h. unter hoher Eislast, bei starkem Wind die Lichtwellenleiter spannungsfrei bleiben.

Diese Aufgabe wird durch die im Kennzeichen der Ansprüche 1 und 3 erfaßten Merkmale gelöst.

Durch die Verseilung der Hohl-bzw. Bündeladern entsteht eine Überlänge des Lichtwellenleiters bzw. der Glasfaser. Eine übermäßige Dehnung des Lichtwellenleiterluftkabels wird durch die formschlüssige Verankerung aller Zugentlastungselemente im Kabelmantel vermieden. Der neuartige Mantelaufbau läßt auch hohe Querkräfte zu, die an den Abspannpunkten erforderlich sind. Die Flachprofile bestehen vorteilhafterweise aus Rechteckprofilen.

Das Zentralelement ist zweckmäßigerweise ein Strang aus glasfaserverstärktem Kunststoff. Ein solcher Strang weist bei relativ geringem spezifischen Gewicht eine hohe Zug- und Stauchfestigkeit und darüberhinaus eine hohe Querkraftbeständigkeit auf.

Die erste Lage enthält zweckmäßigerweise neben den Hohl- und/oder Bündeladern sogenannte Beiläufe und/oder Zugentlastungselemente. Beiläufe bestehen u.a. aus Polyethylen und haben die Aufgabe, die Verseillage auszufüllen. Sie haben aus diesem Grund den gleichen Außendurchmesser wie die Hohl- und/oder Bündelader. Man kann jedoch die Beiläufe durch Zugentlastungselemente ersetzen, welche die gleichen Abmessungen aufweisen. Die Zugentlastungselemente bestehen aus einer Vielzahl von Fasern aus Polyaramid, die entweder innerhalb einer Kunststoffhülle oder in einer Kunststoffmatrix angeordnet sind. Das Einbetten der Fasern in einer Kunststoffmatrix führt zu einer hohen Querdruckstabilität der Zugentlastungselemente.

Für besondere Anwendungsfälle hat sich eine Kabelkonstruktion als geeignet erwiesen, bei der zwischen der ersten und der zweiten Lage eine weitere geschlossene Verseillage aus Zugentlastungselementen angeordnet ist. Diese Zugentlastungselemente können aus glasfaserverstärktem Kunststoff bestehen, was aber zu einer etwas "steifen" Kabelkonstruktion führt. Vorteilhafter erscheint deshalb eine Ausbildung der Zugentlastungselemente aus Polyaramidfasern, wie vorher beschrieben. Bei dieser Kabelkonstruktion sind in der ersten Verseillage neben Hohl- und/oder Bündeladern Beiläufe aus Polyethylen vorgesehen.

Jede Verseillage ist mit entgegengesetzter Schlagrichtung zu der darunter angeordneten Verseillage aufgebracht. Dies ist zwar aus der konventionellen Kabeltechnik an sich bekannt, führt jedoch bei der hier in Rede stehenden Kabelkonstruktion zu einer stabilen Anordnung der Armierungslagen.

Die erste Verseillage kann mit wechselnder Schlagrichtung (SZ-Verseilung) auf das Zentralelement aufgebracht sein. Durch kreuzweise verlaufende Polyaramidfäden wird die SZ-Verseillage auf dem Zentralelement festgelegt.

Soll das Lichtwellenleiterkabel nach der Lehre der Erfindung bei Hochspannungsleitungen über 110 KV bzw. im Einführungsbereich in Umspannwerken eingesetzt werden, wo aufgrund der geringen Abstände zu den Phasenseilen sehr hohe Feldstärken zu erwarten sind, ist es vorteilhaft, daß der Kunststoffaußenmantel koronafest bzw. kriechstromfest ist. Solche Werkstoffe sind für Luftkabel an sich bekannt.

Die Erfindung betrifft weiterhin ein Verfahren zur Herstellung eines Lichtwellenleiterluftkabels, bei dem auf ein Zentralelement eine erste Lage mit zumindest einer Hohl- und /oder Bündelader aufgeseilt, zumindest eine zweite Lage aus Zugentlastungselementen aufgeseilt, und anschließend ein Außenmantel extrudiert wird. Dieses Verfahren zeichnet sich dadurch aus, daß die Flachelemente der zweiten Lage mit Abstand zueinander aufgeseilt werden und der Außenmantel mit einem so hohen Druck extrudiert wird, daß das Kunststoffmaterial des Außenmantels die Verseilzwickel der unter der Lage aus Flachelementen gelegenen Verseillage sowie die Lücken zwischen den Flachelementen vollständig ausfüllt. Die Flachelemente sind nahezu vollständig in dem Kunststoffmaterial des Außenmantels eingebettet. Dadurch wird eine extrem hohe Querdruckstabilität erreicht.

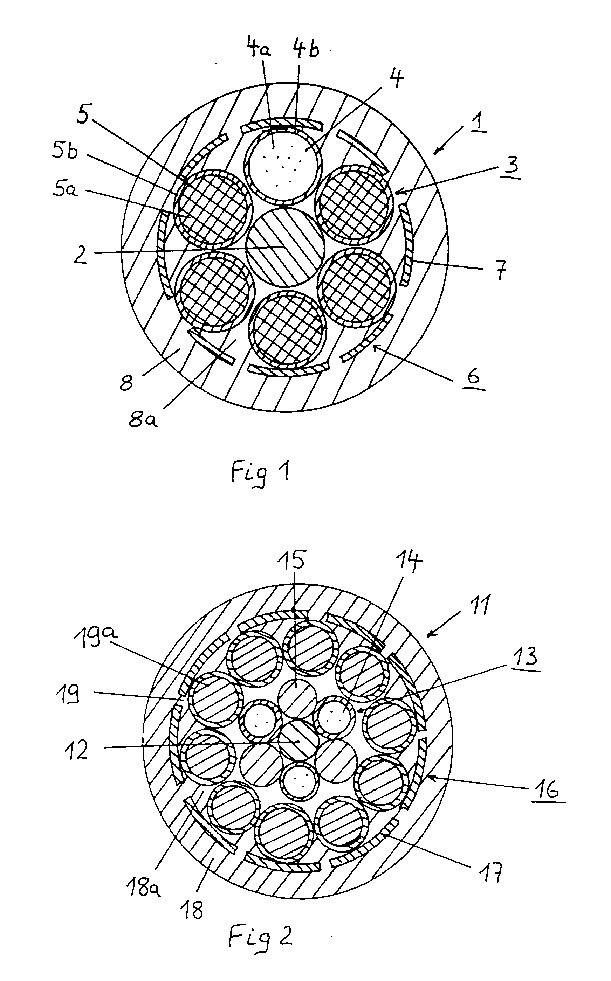

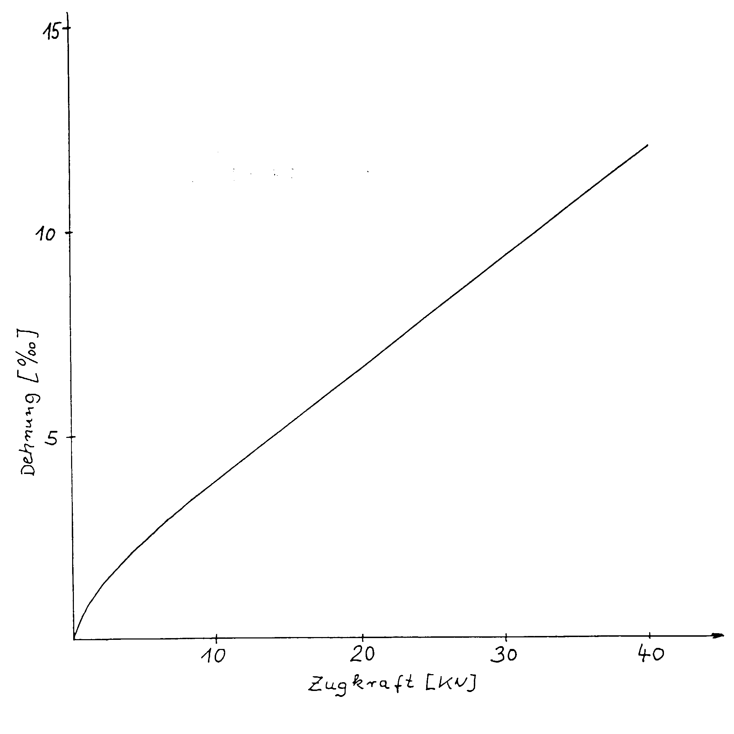

Die Erfindung ist anhand der in den Figuren 1 und 2 sowie eines Diagramms näher erläutert.

Die Figur 1 zeigt ein Lichtwellenleiterluftkabel 1, welches aus einem Zentralelement 2 aus glasfaserverstärktem Kunststoff oder aus Polyaramid, einer um das Zentralelement 2 herumgeseilten ersten Lage 3, aus einer Bündelader 4 und mehreren Zugentlastungselementen aus im wesentlichen Polyaramid besteht. Die Bündelader 4 besteht, wie an sich bekannt, aus mehreren Lichtwellenleitern 4a, die in einem gemeinsamen Kunststoffschlauch 4b angeordnet sind. Die Zugentlastungselemente 5 bestehen aus sogenannten Rovings aus Polyaramidfasern 5a, die zu einem Bündel zusammengefaßt von einem Kunststoffmantel 5b umhüllt sind.

Auf der ersten Verseillage 3 ist eine zweite Verseillage 6 aufgeseilt, die aus Flachelementen bzw. Flachprofilen 7 aus glasfaserverstärktem Kunststoff aufgebaut ist. Die zweite Verseillage ist mit entgegengesetzter Schlagrichtung zur ersten Verseillage 3 aufgebracht. Die Flachelemente 7 weisen einen Abstand zueinander auf, der es ermöglicht, daß bei der Extrusion des Kunststoffaußenmantels 8 Kunststoffmantelmaterial zwischen den Flachelementen 7 hindurchtreten und die Verseilzwickel 8a der ersten Verseillage 3 ausfüllen kann, so daß die Flachelemente nahezu vollständig in dem Kunststoffmantelmaterial eingebettet sind.

Die Figur 2 zeigt ein weiteres Ausführungsbeispiel eines Lichtwellenleiterluftkabels 11 nach der Lehre der Erfindung. Um das Zentralelement 12, welches wie das Zentralelement 2 aufgebaut ist, ist eine erste Verseillage 13 aus drei Bündeladern 14 und drei Beiläufen 15 aus Kunststoff angeordnet. Die Beiläufe 15 können auch als Polyaramidstränge ausgebildet sein. Auf die erste Verseillage 13 ist im Gegenschlag eine Verseillage 19 aus einer Vielzahl von Zugentlastungselementen 19a aufgeseilt, die im wesentlichen wie die Zugentlastungselemente 5, nach Figur 1 aufgebaut sind. Diese Verseillage 19 ist dicht, d. h., die einzelnen Zugentlastungselemente 19a stehen weitestgehend in Berührung miteinander. Dadurch entsteht eine Schutzhülle, die die empfindlichen Hohladern 14 gegen Querkräfte schützt. Über der Verseillage 19 liegt eine Verseillage 16, die, wie in Figur 1, in gleicher Weise aus zueinander beabstandeten Flachelementen 17 besteht, so daß auch hier bei der Extrusion des Kunststoffaußenmantels 18 Kunststoffmaterial in die Zwickelräume 18a eindringen und diese ausfüllen kann.

Die Zugentlastungselemente 5 bzw. 19a können auch aus einer Vielzahl von Polyaramidfasern bestehen, die in einer gemeinsamen Kunststoffmatrix befindlich sind. Eine solche Ausgestaltung gewährleistet gleichermaßen hohe Längzugals auch hohe Querstauchbeständigkeit. Die Abmessungen der Aufbauelemente sind beispielsweise:

| | Fig. 1 | Fig. 2 |
|---|---|---|
| Zentralelement | 3,5 mm | 2,0 mm |
| Bündelader | 1 x 3,5 mm | 3 x 2,0 mm |
| Zugentlastungselemente/Beiläufe | 5 x 3,5 mm | 3 x 2,0 mm |
| Zugentlastungselemente | --- | 10 x 2,8 mm |
| GFK-Flachprofile | 8 x 3,4 mm x 0,8 mm | 9 x 3,4 mm x 0,8 mm |
| Kabelaußendurchmesser | 14,2 mm | 15,5 mm |

Das Material des Außenmantels 8 bzw. 18 ist zweckmäßigerweise ein Polyethylen hoher Dichte, dem zur Erhöhung der Koronafestigkeit bzw. Kriechstromfestigkeit, wie an sich bekannt, Stoffe zugegeben werden. Auch kann der Außenmantel 8 bzw. 18 zweischichtig ausgebildet sein, d. h., ein Innenmantel aus reinem Polyethylen, der die Zwickel 8a bzw. 18a ausfüllt und die Flachelemente 7 bzw. 17 einbettet, und ein dünner Außenmantel aus koronafestem Polyethylen.

Die erste Verseillage 13 ist bevorzugt mit wechselnder Schlagrichtung (SZ-Verseilung) auf das Zentralelement 12 aufgeseilt. Die daraus resultierenden Vorteile sind dem Kabelfachmann bekannt. Zur Festlegung der Umkehrpunkte der Verseilrichtung ist vorgesehen, daß auf die erste Verseillage 13 in nicht dargestellter Weise eine kreuzweise Bewicklung aus Polyaramidfäden aufgebracht ist.

Insbesondere das in Figur 2 dargestellte Kabel ist für hohe Anforderungsprofile geeignet, wie z. B. hohe Eislast (mehr als 10 N/m), hohe Kabelspannfeldlänge (500 m und größer), etc. Darüberhinaus bietet es weitestgehend Schutz gegen Schrotkugeln.

Das erfindungsgemäße Kabel weist eine hohe, genau definierte Faserdehnungsreserve von bis zu ca. 1 % auf und ermöglicht kleinere Faserkrümmungen. Die Stauchstabilität ist bedingt durch das GFK-Zentralelement und die verseilten GFK-Flachelemente sehr hoch. Die Zugentlastungselemente sind im Kabelmantelaufbau formschlüssig verankert. Dies ist die Folge der Extrusion des Kabelmantels mit hohem Druck.

Das Zugkraft/Dehnungsdiagramm eines Kabels nach Figur 2 zeigt bei Raumtemperatur eine relativ geringe Dehnung von 12 ^{o}/oo bei einer Zugkraft von 40 KN. Bei der Versuchsdurchführung wurde die Last stetig bis auf 40 KN erhöht, dort ca. 18 min beibehalten und die Last stetig bis auf 0 verringert. Nach Entlastung verblieb eine geringe bleibende Dehnung von ca. 0,5 ^{o}/oo.

Versuche bei 60° C zeigten bis 40 KN gegenüber den Werten bei Raumtemperatur ein identisches Zug/Dehnungsverhalten. Durchgeführte Zugversuche bis 70 KN führten selbst nach 7 min Standzeit zu keinem Kabelbruch.

## Patentansprüche

1. Lichtwellenleiterluftkabel mit einem Zentralelement (2) aus einem Material hoher Festigkeit, einer um das Zentralelement (2) herumgeseilten geschlossenen ersten Lage (3) mit zumindest einer Hohl- und/oder Bündelader (4), einer konzentrisch zur ersten Lage (3) angeordneten zweiten Lage (6) aus mehreren zugfesten Flachelementen (7) aus glasfaserverstärktem Kunststoff, die direkt auf die erste Lage (3) aufgeseilt und mit Abstand zueinander angeordnet sind, sowie einem Kunststoffaußenmantel (8), wobei der Kunststoff des Außenmantels (8) in die Verseillücken zwischen den Flachelementen (7) und in die durch die Verseilelemente der ersten Lage (3) gebildeten Verseilzwickel (8a) eingedrungen ist.

2. Lichtwellenleiterluftkabel nach Anspruch 1, wobei die erste Lage (3) neben Hohl- und/oder Bündelader(n) (4) Beiläufe und/oder Zugentlastungselemente (5) enthält, und die Zugentlastungselemente (5) aus einer Vielzahl von Fasern (5a) aus Polyaramid bestehen, die in einer Kunststoffhülle (5b) angeordnet bzw. in einer Kunststoffmatrix eingebettet sind.

3. Lichtwellenleiterluftkabel mit einem Zentralelement (12) aus einem Material hoher Festigkeit, einer um das Zentralelement (12) herumgeseilten ersten Lage (13) mitzumindest einer Hohl- und/oder Bündelader (14), einer konzentrisch zur ersten Lage (13) angeordneten geschlossenen Verseillage (19) aus Zugentlastungselementen (19a), einer zweiten Lage (16) aus mehreren zugfesten Flachelementen (17) aus glasfaserverstärktem Kunststoff, die direkt auf die geschlossene Verseillage (19) aufgeseilt und mit Abstand zueinander angeordnet sind, wobei jede Verseillage (13, 16, 19) mit entgegengesetzter Schlagrichtung zu der darunter angeordneten Verseillage aufgebracht ist, sowie einem Kunststoffaußenmantel (18), wobei der Kunststoff des Außenmantels (18) in die Verseillücken zwischen den Flachelementen (17) und in die durch die Zugenlastungselementen (19a) gebildeten Verseilzwickel (18a) eingedrungen ist.

4. Lichtwellenleiterluftkabel nach einem der Ansprüche 1 bis 3, wobei die erste Verseillage (3, 13) mit wechselnder Schlagrichtung auf das Zentralelement (2, 12) aufgebracht ist und diese Verseillage (3, 13) durch kreuzweise verlaufende Polyaramidfäden abgebunden ist.

5. Lichtwellenleiterluftkabel nach Anspruch 3 oder 4 wenn abhängig von Anspruch 3, wobei die Zugentlastungselemente (19a) aus einer Vielzahl von Polyaramidfasern bestehen, die von einer Kunststoffhülle umgeben oder in einer Kunststoffmatrix eingebettet sind.

6. Lichtwellenleiterluftkabel nach einem der Ansprüche 1 bis 5, wobei der Mantel (8, 18) aus einem kriechstromfesten Kunststoff auf der Basis von Polyethylen hoher Dichte (HDPE) besteht.

7. Verfahren zur Herstellung eines Lichtwellenleiterluftkabels nach einem der Ansprüche 1 bis 6, bei dem auf das Zentralelement (2, 12) die erste Lage (3, 13) aufgeseilt und zumindest eine zweite Lage (6, 16) aus Zugentlastungselementen (7, 17) aufgeseilt wird und anschließend der Außenmantel (8, 18) extrudiert wird, wobei die Flachelemente (7, 17) der zweiten Lage (6, 16) mit Abstand zueinander direkt auf die darunter gelegene geschlossene Lage (3, 19) aufgeseilt werden, und der Außenmantel (8, 18) mit einem so hohen Druck extrudiert wird, daß das Kunststoffmaterial die durch die Verseilelemente gebildeten Verseilzwickel (8a, 18a) der unter der Lage (6, 16) aus Flachelementen (7, 17) gelegenen Verseillage (3, 19) sowie die Lücken zwischen den Flachelementen (7, 17) vollständig ausfüllt.

## Claims

1. Aerial fibre-optic cable having a central element (2) made of a high-strength material, a closed first layer (3), stranded around the central element (2) and having at least one loose buffer and/or multifibre unit (4), a second layer (6), arranged concentrically with respect to the first layer (3) and comprising a plurality of tension-resistant flat elements (7) made of glass-fibre-reinforced plastic, which are stranded directly onto the first layer (3) and are arranged at a distance from one another, and also a plastic outer sheath (8), the plastic of the outer sheath (8) having penetrated into the stranding gaps between the flat elements (7) and into the stranding interstices (8a) formed by the stranding elements of the first layer (3).

2. Aerial fibre-optic cable according to Claim 1, the first layer (3) including, in addition to loose buffer(s) and/or multifibre unit(s) (4), fillers and/or tension-relieving elements (5), and the tension-relieving elements (5) comprising a multiplicity of fibres (5a) made of polyaramide, which are arranged in a polymer enclosure (5b) or are embedded in a polymer matrix.

3. Aerial fibre-optic cable having a central element (12) made of a high-strength material, a first layer (13), stranded around the central element (12) and having at least one loose buffer and/or multifibre unit (14), a closed stranded layer (19), arranged concentrically with respect to the first layer (13) and comprising tension-relieving elements (19a), a second layer (16) comprising a plurality of tension-resistant flat elements (17) made of glass-fibre-reinforced plastic, which are stranded directly onto the closed stranded layer (19) and are arranged at a distance from one another, each stranded layer (13, 16, 19) being applied with a direction of lay opposite to the stranded layer arranged thereunder, and also a plastic outer sheath (18), the plastic of the outer sheath (18) having penetrated into the stranding gaps between the flat elements (17) and into the stranding interstices (18a) formed by the tension-relieving elements (19a).

4. Aerial fibre-optic cable according to one of Claims 1 to 3, the first stranded layer (3, 13) being applied to the central element (2, 12) with an alternating direction of lay and this stranded layer (3, 13) being laced by cross-running polyaramide filaments.

5. Aerial fibre-optic cable according to Claim 3 or 4, when dependent on Claim 3 the tension-relieving elements (19a) comprising a multiplicity of polyaramide fibres which are surrounded by a polymer enclosure or are embedded in a polymer matrix.

6. Aerial fibre-optic cable according to one of Claims 1 to 5, the sheath (8, 18) consisting of a tracking-resistant plastic based on high-density polyethylene (HDPE).

7. Process for producing an aerial fibre-optic cable according to one of Claims 1 to 6, in which the first layer (3, 13) is stranded onto the central element (2, 12) and at least one second layer (6, 16) comprising tension-relieving elements (7, 17) is stranded on and subsequently the outer sheath (8, 18) is extruded, the flat elements (7, 17) of the second layer (6, 16) being stranded at a distance from one another directly onto the closed layer (3, 19) laid thereunder, and the outer sheath (8, 18) being extruded at such a high pressure that the polymer material completely fills the stranding interstices (8a, 18a), formed by the stranding elements, of the stranded layer (3, 19) laid under the layer (6, 16) comprising flat elements (7, 17) and also the gaps between the flat elements (7, 17).

## Revendications

1. Câble aérien à fibres optiques comportant un élément central (2) constitué d'un matériau à haute résistance, une première couche (3) fermée câblée autour de l'élément central (2) comportant au moins un fil creux et/ou un toron (4), une deuxième couche (6) disposée de manière concentrique par rapport à la première couche (3), constituée de plusieurs éléments plats (7) résistants à la traction, en plastique renforcé à la fibre de verre, qui sont câblés directement sur la première couche (3) et sont disposés à distance les uns des autres, ainsi qu'une gaine d'étanchéité (8) en plastique, le plastique de la gaine d'étanchéité (8) étant enfoncée dans les interstices de câblage entre les éléments plats (7) et dans les coins de câblage (8a) formés par les éléments de câblage de la première couche (3).

2. Câble aérien à fibres optiques selon la revendication 1, la première couche (3) comportant en plus du (des) fil(s) creux et/ou du (des) toron(s) (4) des bourrages et/ou des éléments de décharge de traction (5) et les éléments de décharge de traction (5) étant constitués d'une pluralité de fibres (5a) en polyamide, qui sont disposées dans une gaine en plastique (5b) ou sont enrobés dans une matrice en plastique.

3. Câble aérien à fibres optiques comportant un élément central (12) constitué d'un matériau à haute résistance, une première couche (13) câblée autour de l'élément central (12), comportant au moins un fil creux et/ou un toron (14), une couche de câblage (19) fermée disposée de manière concentrique par rapport à la première couche (13) constituée d'éléments de décharge de traction (19a), une deuxième couche (16) constituée de plusieurs éléments plats (17) résistants à la traction en plastique renforcé à la fibre de verre, qui sont câblés directement sur la couche (19) câblée fermée et disposés à distance les uns des autres, chaque couche de câblage (13, 16, 19) étant montée dans un sens de commettage opposé à celui de la couche de câble disposée au-dessous, ainsi qu'une gaine d'étanchéité (18) en plastique, le plastique de la gaine d'étanchéité (18) étant enfoncé dans les interstices de câblage situées entre les éléments plats (17) et dans les coins de câblage (18a) formés par les éléments de décharge (19a) de traction.

4. Câble aérien à fibres optiques selon l'une des revendications 1 à 3, la première couche de câble (3, 13) étant montée sur l'élément central (2, 12) dans un sens de commettage alterné et cette couche de câble (3, 13) étant fermée d'une enveloppe de fils en polyaramide s'étendant en croix.

5. Câble aérien à fibres optiques selon la revendication 3 ou 4, lorsqu'elles sont dépendantes de la revendication 1, les éléments de décharge de traction (19a) étant constitués d'une pluralité de fils en polyaramide, qui sont entourés d'une gaine en matière plastique ou sont enrobés dans une matrice en matière plastique.

6. Câble aérien à fibres optiques selon l'une des revendications 1 à 5, la gaine (8, 18) étant constituée d'un plastique résistant aux courants de fuite sur une base en polyéthylène à étanchéité élevée (HDPE).

7. Procédé de fabrication d'un câble aérien à fibres optiques selon l'une des revendications 1 à 6, avec lequel la première couche (3, 13) est câblée sur l'élément central (2, 12) et au moins une deuxième couche (6, 16), constituée d'éléments de décharge de traction (7, 17), est câblée et avec lequel la gaine d'étanchéité (8, 18) est ensuite extrudée, les éléments plats (7, 17) de la deuxième couche (6, 16) étant câblés à distance les uns des autres directement sur la couche (3, 19) fermée disposée dessous, et la gaine d'étanchéité (8, 18) étant extrudée à une pression si élevée que la matière plastique remplit complètement les coins de câblage (8a, 18a) constitués par les éléments de câblage de la couche de câblage (3, 19) disposée sous la couche (6, 16) constituée d'éléments plats ainsi que les interstices (7, 17) entre les éléments plats (7, 17).
